# EUROPÄISCHE PATENTSCHRIFT

(11) **EP 1 074 902 B1**
(45) Veröffentlichungstag und Bekanntmachung des Hinweises auf die Patenterteilung: **03.12.2003**
(21) Anmeldenummer: 00115293.3
(22) Anmeldetag: 14.07.2000
(51) Int. Cl.: G05B 23/02, G05B 17/02

(54) **Verfahren zur Ermittlung der Schichtdickenverteilung in einer Lackschicht**
Method for determining the distribution of the layer thickness in a paint layer
Procédé pour la détermination de la distribution d'épaisseur de la couche dans une couche de laque

(30) Priorität: 31.07.1999 DE 19936146
(43) Veröffentlichungstag der Anmeldung: 07.02.2001
(73) Patentinhaber: ABB RESEARCH LTD., 8050 Zürich (CH)
(72) Erfinder: Eickmeyer, Dietmar, Dr., 69126 Heidelberg (DE); Börner, Gunter, Dr. Ing., 69242 Mühlhausen (DE)
(74) Vertreter: Miller, Toivo

(56) Entgegenhaltungen:
- R.PAYNE ET AL: "SPRAY FORMING QUALITY PREDICTIONS VIA NEURAL NETWORKS" JOURNAL OF MATERIALS ENGINEERING AND PERFORMANCE, Bd. 2, Nr. 5, Oktober 1993 (1993-10), Seiten 693-701, XP000946210 USA
- T.ZAPPIA ET AL: "FUZZY LOGIC AND THE SPRAY FORMING PROCESS" PROCEEDINGS OF THE SPIE ,THE INTERNATIONAL SOCIETY FOR OPTICAL ENGINEERING, Bd. 2061, 1993, Seiten 504-515, XP000955650 USA
- M.MATTESON ET AL: "AN APPROACH TO MODELING THE SPRAY FORMING PROCESS WITH ARTIFICIAL NEURAL NETWORKS" PROCEEDINGS OF THE SPIE, Bd. 2189, 1994, Seiten 423-432, XP000955642 USA

## Beschreibung

Die Erfindung bezieht sich auf ein Verfahren zur Ermittlung einer beim Farblacksprühen nach Eingabe bestimmter Sprühparameter in eine elektrostatisch basierte Lacksprüheinrichtung zu erwartenden Schichtdickenverteilung in der zu erzeugenden Lackschicht.

Eine bekannte Vorgehensweise zur a-priori Berechnung des Lackierergebnisses von elektrostatisch basierten Lackieranlagen beruht auf empirischen Untersuchungen, mit Hilfe derer wenig fundierte Schätzwerte und nur sehr vereinfachte mathematische Beschreibungen für das Lackierergebnis ermittelbar sind. Die dabei notwendigen extremen Vereinfachungen, wobei auch einige Einflüsse auf das Lackierergebnis, wie z.B. Umgebungstemperatur oder Art und Form der Lackierkabine unberücksichtigt bleiben, führen zu einer unzureichenden Genauigkeit der Berechnung.

Ein anderer bekannter Vorschlag sieht eine komplexe physikalische Modellbildung vor, mit deren Hilfe der sehr komplexe physikalische Prozeß des Lackierens detailgetreu nachgebildet werden soll, anhand dessen das Lackierergebnis bestimmt werden soll.

Nachteilig ist jedoch die Komplexität der Modellbildung. So ist eine hinreichend genaue Nachbildung der physikalischen Vorgänge während des Lackiervorganges, und insbesondere deren Rückwirkungen untereinander kaum möglich, da es sich um stochastisch ablaufende Vorgänge handelt (Zerstäubung, Verwirbelung, etc.). Zudem ist der Aufwand für die Modellbildung und die reine Berechnungszeit des Modells auch auf derzeit verfügbaren Rechenanlagen inakzeptabel hoch (Tage oder Wochen).

Der Erfindung liegt daher die Aufgabe zugrunde, ein Verfahren zur Ermittlung einer zu erwartenden Schichtdickenverteilung in einer zu erzeugenden Lackschicht anzugeben, das bei relativ geringem Aufwand zu ausreichend genauen Ergebnissen führt.

Diese Aufgabe wird durch ein Verfahren zur Schichtdickenermittlung mit den im Anspruch 1 angegebenen Merkmalen gelöst.

Beim erfindungsgemäßen Verfahren wird nicht der gesamte physikalische Prozeß des Lackierens, sondem das Lackierergebnis, zunächst ohne Berücksichtigung der physikalischen Prozesse, anhand eines phänomenologischen Modells nachgebildet. Die dabei berücksichtigten Modellparameter entsprechen nur teilweise den tatsächlichen Parametern des Lackiervorganges. Der Zusammenhang zwischen Modellparametern und den realen Sprühparametem wird mit Hilfe künstlicher neuronaler Netze hergestellt, die anhand realer Messungen angelernt wurden.

Der Vorteil dieses Gesamtverfahrens beruht darauf, daß eine komplexe physikalische Modellbildung des Gesamtprozesses vermieden wird. Trotzdem sind die erzielten Ergebnisse realitätsnah und berücksichtigen aufgrund der Verwendung realer Meßwerte zum Anlemvorgang der künstlichen neuronalen Netze alle, also auch bisher unbekannte Zusammenhänge.

Eine weitere Erläuterung der Erfindung erfolgt nachstehend anhand eines in Zeichnungsfiguren dargestellten Ausführungsbeispiels.

Es zeigen:
- Fig. 1: eine schematisierte Darstellung einer Lacksprühvorrichtung und der von ihr erzeugten Sprühwolke,
- Fig. 2: ein Funktionsschema des Verfahrens,
- Fig. 3: eine Draufsicht auf ein stationäres Sprühbild,
- Fig. 4 und 5: Komponenten eines dreidimensionalen stationären Sprühbildes,
- Fig. 6: ein dreidimensionales Gesamtsprühbild,
- Fig. 7: einen vertikalen Integralschnitt durch eine Lackschicht, und
- Fig. 8: einen horizontalen Integralschnitt durch eine Lackschicht.

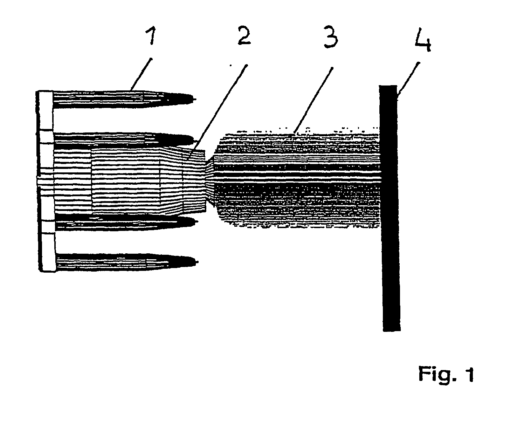

Fig. 1 zeigt eine schematische Darstellung einer beispielsweise als Zerstäuberring ausgeführten Lacksprüheinrichtung 2, die einen Lacksprühstrahl 3 oder eine Sprühwolke liefert, wobei eine Aufladung mittels sechs Hochspannungselektroden 1 erfolgt, die kreisförmig um den Zerstäuberring angeordnet sind. Der Lack wird auf einen Gegenstand 4 abgeschieden.

Durch horizontale oder vertikale Bewegung, auch oszillierende Bewegung der Sprüheinrichtung 2 sowie durch eine Änderung des Abstandes zwischen Sprüheinrichtung 2 und Gegenstand 4 ist eine Lackschicht auf dem Gegenstand 4 erzeugbar. Die Lackschichtdickenverteilung ist meßbar.

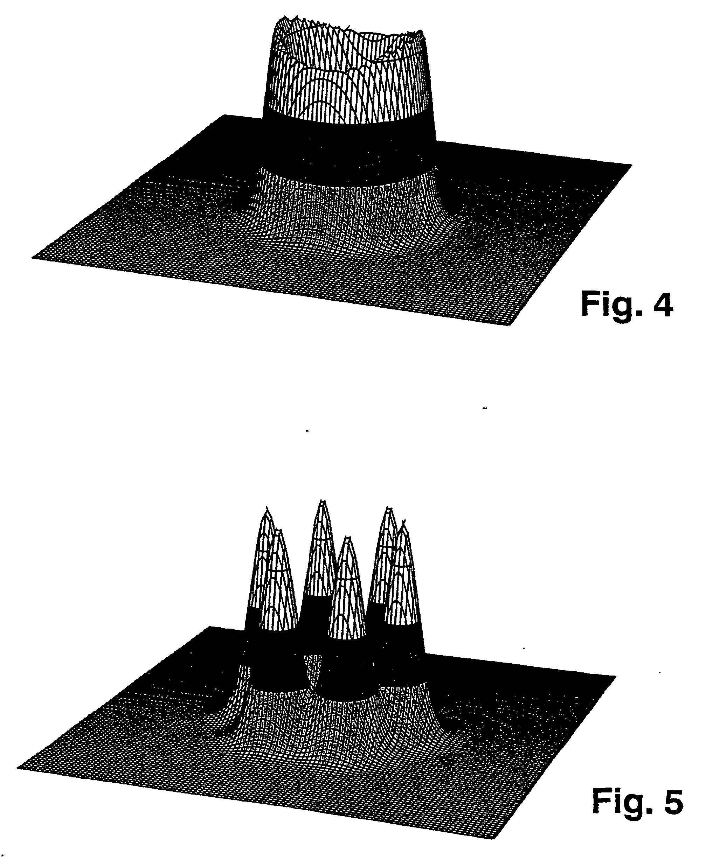

Fig. 3 zeigt eine Draufsicht auf ein mit der Sprüheinrichtung gemäß Fig. 1 erzeugbaren Sprühbild, wobei vorausgesetzt ist, daß die Sprüheinrichtung während des Sprühvorgangs nicht bewegt wurde. Durch geeignete Bewegung der Sprüheinrichtung kann eine Lackschicht mit praktisch gleichmäßiger Dickenverteilung über der lackierten Fläche erzielt werden.

Aus den Fig. 4 bis 6 ist ersichtlich, daß das in Fig. 3 als Draufsicht gezeigte quasi stationäre Sprühbild, das mit einer anhand der Fig. 1 beschriebenen Ausführung einer Sprüheinrichtung herstellbar ist, sich aus zwei Hauptkomponenten zusammensetzt: Fig. 4 zeigt eine Torus-ähnliche Figur mit einem Scheitelpunkt einer Gaus-Glocke, der unterhalb der Kante des Zerstäuberrings liegt; es ist Rotationssymmetrie um die Achse des Zerstäuberrings gegeben. Fig. 5 zeigt eine Figur mit sechs glokkenförmigen Lackabscheidungen, die einer Gausschen Verteilung entsprechen, und sich kreisförmig verteilt jeweils auf einem Kreissegment zwischen zwei Elektroden 1 (Fig. 1) befinden.

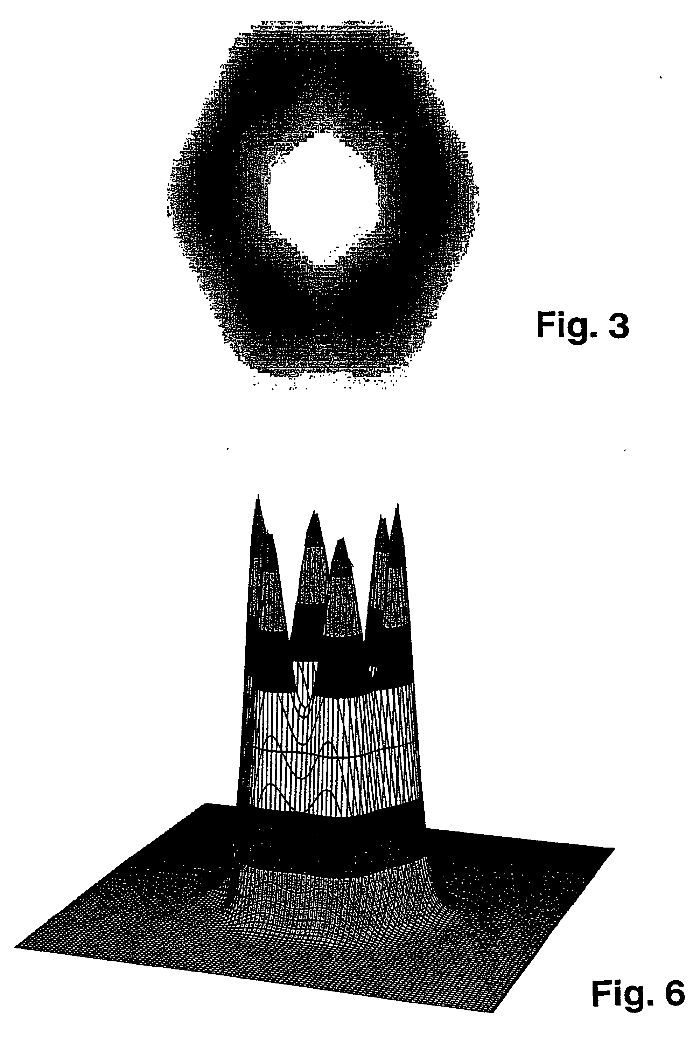

Ein durch Zusammensetzung der beiden Komponenten sich ergebendes Gesamtsprühbild ist in Fig. 6 gezeigt.

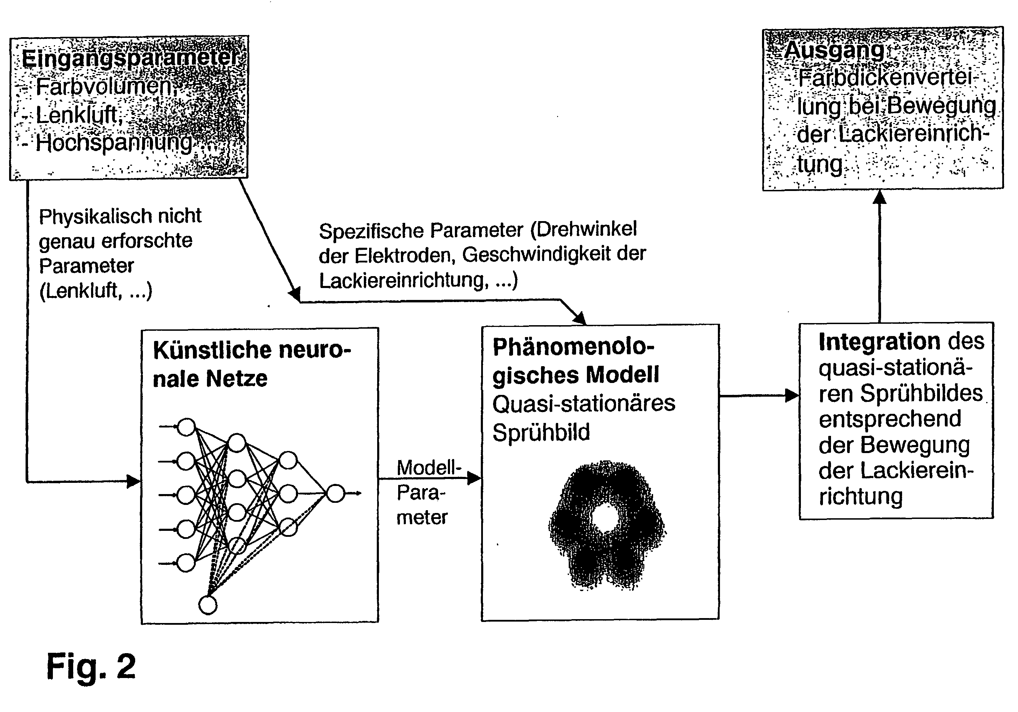

Fig. 2 zeigt ein Funktionsschema des Verfahrens. Das Verfahren beruht auf der Nachbildung eines 3-dimensionalen, quasi stationären Sprühbildes, d.h. der Farbverteilung unter einem feststehenden Applikator zum Beispiel einer beschriebenen Sprüheinrichtung. Ein solches Sprühbild ist beispielsweise in Fig. 6 dargestellt. Zugrundeliegende, z.B. in Fig. 4 und 5 dargestellte Komponenten können durch geeignete Korrekturfaktoren "unsymmetrisch" gestaltet werden, um den Einfluß von Parametern wie Gravitation oder Luftströmung auf das Lackierergebnis beschreiben zu können. Es ist auch die Einführung weiterer Komponenten möglich.

Das in Fig. 3 gezeigte Sprühbild ist durch folgende Parameter beschreibbar:
- Radius der Torus-ähnlichen Figur unter dem Zerstäuberring,
- Farbvolumen der Torus-ähnlichen Figur unter dem Zerstäuberring,
- Unsymmetriegrad der Torus-ähnlichen Figur unter dem Zerstäuberring.
- Streuung der Gaus-Glocke, durch deren Rotation die Torus-ähnliche Figur gebildet wird,
- Anzahl der Elektroden,
- Anordnungsradius der Elektroden,
- Farbvolumen der Gaus-Glocken zwischen den Elektroden,
- Unsymmetriegrad der Gaus-Glocken zwischen den Elektroden,
- Streuung der Gaus-Glocke zwischen den Elektroden,
- Drehwinkel der Elektroden.

Weitere Parameter sind denkbar.

Es ist weiterhin zu beachten:
- das Volumen des 3-dimensionalen Sprühbildes muß dem tatsächlichen Farbdurchsatz der realen Anordnung entsprechen (lineare Skalierung);
- einige Parameter, wie z.B. Anzahl der Elektroden fließen als Festwert in das Verfahren ein.

Das Resultat einer solchen Berechnung eines Sprühbildes ist bei der Realisation auf einer Datenverarbeitungsanlage in einer 2-dimensionalen Variablen zu speichern. Die beiden Dimensionen entsprechen der Grundfläche des quasi stationären Sprühbildes, der Wert der jeweiligen Variablen der zugehörigen Höhe der Farbe (vgl. Fig. 6).

Fig. 2 ist zu entnehmen, daß verfahrensgemäß ein phänomenologisches Modell des Sprühbildes erstellt und verwendet wird. Ein solches Modell ist einfacher als ein Modell, das die physikalischen Zusammenhänge beschreibt.

Ein Teil der Eingangsparameter sind als Festwerte direkt dem Modell zuführbar. Ein anderer Teil der Eingangsparameter, deren Einfluß nicht exakt beschreibbar ist, wird einem künstlichen neuronalen Netz zugeführt, das zusätzliche Modellparameter liefert. Durch Berücksichtigung einer vorgegebenen Bewegung der Sprüheinrichtung durch Integration des quasi stationären Sprühbildes entsteht ein realistisches Abbild der zu erwartenden Lackdickenverteilung beim Lacksprühen.

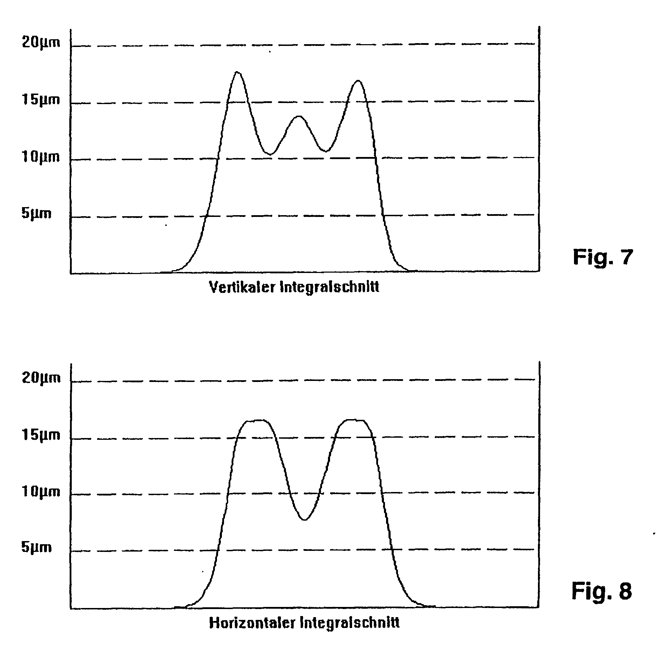

Die Bestimmung des 3-dimensionalen Sprühbildes bei Bewegung der Lackiereinrichtung kann auf folgende Weise geschehen:
- Integration des Flächeninhaltes einer Schnittfläche durch das quasi stationäre Sprühbild bei Bewegung der Lackiereinrichtung mit linearer Geschwindigkeit. Die Ausrichtung der Schnittfläche erfolgt korrespondierend zur Bewegungsrichtung der Lackiereinrichtung. Fig. 7 zeigt beispielhaft einen Schnitt durch eine durch vertikale Bewegung der Sprüheinrichtung gebildeten Lackschicht. Fig. 8 zeigt eine entsprechende Schichtdickenverteilung, die sich durch horizontale Bewegung der Sprüheinrichtung ergibt.
- Fiktive Bewegung des quasi stationären Sprühbildes der Grundfläche (n x n) innerhalb einer 2-dimensionalen Grundfläche (a x b, a>n, b>n) in fiktiven äquidistanten Zeitintervallen. Entsprechend der geforderten Geschwindigkeit der Bewegung und entsprechend der Lage des quasi stationären Sprühbildes werden die Zahlenwerte an den betreffenden Koordinaten der (a x b)-Fläche erhöht, über denen sich gerade die (n x n)-Fläche befindet.

Die Verwendung künstlicher neuronaler Netze zur Umwandlung der realen Eingangsparameter der physikalischen Anordnung in Modellparameter macht es erforderlich, die künstlichen neuronalen Netze mittels realer Meßdaten vor ihrem Einsatz anzulernen.

Reale Eingangsparameter für die neuronalen Netze sind im Fall der hier beispielhaft zugrundeliegenden Sprüheinrichtung:
- Art der Farbe,
- Lackvolumen pro Zeit,
- Geschwindigkeit der Lackiereinrichtung,
- Farbtyp,
- Lenkluft-Daten,
- Steuerluft-Daten,
- Hochspannung,
- Temperatur,
- Rotationsgeschwindigkeit des Zerstäuberringes,
- Art der Lackierkabine, und
- Aufbau des Applikators (z.B. Zahl der Elektroden, Radius des Zerstäuberringes).

Ausgangsgrößen der neuronalen Netze sind Modellparameter, die mit direkten Eingangsparametem kombinierbar sind.

Neuronale Netze sind für Zuordnungsfunktionen, deren physikalischer Hintergrund nicht genau beschreibbar ist, sehr geeignet (Black-Box-Modell). Als geeigneter Typ von neuronalen Netzen ist das Multilayer-Perceptron anzusehen. Folgende Struktur des neuronalen Netzes ist geeignet:
- Die Zahl der Eingangsneuronen entspricht der Zahl der betrachteten physikalischen Eingangsparameter wie oben beschrieben, die aber in weiten Grenzen als variabel anzusehen ist (Elimination von nicht - relevanten Eingangsparametern);
- Die Zahl der Ausgangsneuronen entspricht der Zahl der gewünschten Modellparameter.

Es kann sich als sinnvoll erweisen, für jeden gewünschten Modellparameter ein separates neuronales Netz anzulernen, das lediglich über einen einzigen Ausgang sowie eine Anzahl von Eingangsneuronen verfügt, die einem Teil oder der Gesamtheit der zur Verfügung stehenden Eingangsgrößen entspricht.

Die Zahl der verborgenen Schichten zwischen Ein- und Ausgangsneuronen kann von Null bis sinnvollerweise 2 variieren.

Andere Typen von neuronalen Netzen sind ebenfalls denkbar.

Zum Anlernen eines solchen Netzes ist ein "supervised learning"-Verfahren sinnvoll, z.B. "Backpropagation", das die Parameter des neuronalen Netzes anhand einer geeigneten Anzahl von korrespondierenden Ein- und Ausgangsvektoren bestimmt ("Vektor" bedeutet in diesem Fall die Aneinanderreihung der gewünschten Ein- bzw. Ausgangsgrößen).

Die Erzeugung des Lerndatensatzes, der eine entsprechende Anzahl solcher korrespondierenden Vektoren enthält, ist anhand realer Messungen durchzuführen:

Hierbei wird folgendermaßen vorgegangen:
- Es wird unter Variation direkter Eingangsparameter eine Anzahl von C Sprühbildem erzeugt, deren Eigenschaften innerhalb eines physikalisch sinnvollen Bereiches liegen;
- es steht eine Anzahl von D < C realen Messungen zur Verfügung;
- für jede Einzelmessung d aus D wird die ähnlichste (minimale quadratische Abweichung) Simulation c aus C ermittelt, womit der Zusammenhang zwischen realen Parametern der Lackiereinrichtung und Modellparametern gegeben ist. Für jedes d aus D wird genau 1 c aus C ermittelt;
- die.gefundenen D Wertepaare sind in geeigneter Form und Reihenfolge in den Lerndatensatz zu schreiben.

Wenn die Lernvorgänge zweier neuronaler Netze, die sich formal lediglich um einen Eingangsparameter unterscheiden, bei sonst identischem Lerndatensatz (lediglich der eine Parameter wird nicht berücksichtigt) zu gleichwertigen Lemergebnissen führen (kumulierter Fehler), kann der betreffende Parameter als nicht relevant erkannt werden.

## Patentansprüche

1. Verfahren zur Ermittlung einer beim Farblacksprühen nach Eingabe bestimmter Sprühparameter in eine elektrostatisch basierte Lacksprüheinrichtung zu erwartenden Schichtdickenverteilung in der erzeugten Lackschicht, wobei unter Einsatz einer dafür eingerichteten Datenverarbeitungseinrichtung
a) ein phänomenologisches mathematisches Modell eines quasi stationären dreidimensionalen Sprühbildes erstellt und verwendet wird,
b) dem phänomenologischen Modell spezifische Parameter, wie Drehwinkel von Elektroden der Sprüheinrichtung und Bewegungsgeschwindigkeit der Sprüheinrichtung als feste Eingabeparameter direkt eingegeben werden,
c) zusätzliche reale physikalische Eingabeparameter, wie Farbvolumen, Lenkluftdaten und Hochspannungswert, deren Einfluß auf das Sprühergebnis nicht genau bekannt ist, einem künstlichen neuronalen Netz zugeführt werden, das zuvor unter Verwendung realer Eingabedaten, wie der Ausführung der verwendeten Sprüheinrichtung, des Farbtyps, der Betriebsparameter und von Schichtdickenverteilungs-Meßwerten angelernt wurde, und das eine Umwandlung der zusätzlichen Eingabeparameter in Modell-Eingabeparameter durchführt, die dem phänomenologischen Modell zugeführt werden,
d) vom phänomenologischen Modell gebildete Sprühbilder in einer weiteren Funktionseinheit abhängig von Bewegungsdaten der Sprüheinrichtung, die in den Eingabeparametem enthalten sind, zur Gesamtlackschicht integriert werden, und die Schichtdickenverteilung dieser Lackschicht ausgegeben wird.

2. Verfahren nach Anspruch 1, **dadurch gekennzeichnet, daß** für jeden gewünschten Modellparameter ein separates neuronales Netz angelernt wird, das lediglich über einen einzigen Ausgang sowie eine Anzahl von Eingangsneuronen verfügt, die einem Teil oder der Gesamtheit der zur Verfügung stehenden Eingangsgrößen entspricht.

3. Verfahren nach Anspruch 1 oder 2, **dadurch gekennzeichnet, daß** ein Parameter als nicht relevant anerkannt und eliminiert wird, wenn die Lernvorgänge zweier neuronaler Netze, die sich formal lediglich um einen Eingangsparameter unterscheiden, bei sonst identischem Lerndatensatz zu gleichwertigen Lernergebnissen führen.

## Claims

1. A method for determining the distribution of a layer thickness in the produced paint layer as expected in lake spraying after the entry of certain spray parameters using an electrostatic spraying device, whereby by using a data processing device set up for this purpose:
a) a phenomenological mathematical model of a quasi stationary three-dimensional spray image is produced and used;
b) specific parameters such as rotational angle of the spray device electrodes and rate of movement of the spray device are entered directly as fixed parameters into the phenomenological model;
c) additional real physical input parameters such as color volume, pilot air data and high voltage value whose influence on the spray result is not known precisely are supplied to an artificial neuronal network which was trained previously by using real input data such as the configuration of the used spray device, the type of paint, the operating parameter and the measured values of the layer thickness distribution and which performs a conversion of the additional input parameters into model input parameters which are supplied to the phenomenological model;
d) the spray images formed by the phenomenological model are integrated in a further functional unit into a total paint layer depending on the movement data of the spray device and the layer thickness distribution of said paint layer is output.

2. A method as claimed in claim 1, **characterized in that** a separate neuronal network is trained for each desired model parameter, which separate neuronal network merely comprises a single output and a number of input neurons which correspond to a part or the entirety of the available input variables.

3. A method as claimed in claim 1 or 2, **characterized in that** a parameter is recognized as not relevant and is eliminated when the training processes of two neuronal networks which formally differ from each other merely by one input parameter lead to similar training results at a training data record which is otherwise identical.

## Revendications

1. Procédé pour déterminer la distribution d'épaisseur devant être obtenue dans la couche de peinture terminée, après l'entrée de paramètres de pulvérisation déterminés dans une installation de pulvérisation de peinture électrostatique, selon lequel moyennant l'utilisation d'un dispositif de traitement de données spécialement adapté,
a) on établit et on utilise un modèle mathématique phénoménologique d'une image de pulvérisation tridimensionnelle quasi-stationnaire,
b) on entre directement dans le modèle phénoménologique, comme paramètres d'entrée fixes, des paramètres tels que l'angle de rotation d'électrodes du dispositif de pulvérisation et la vitesse de déplacement du dispositif de pulvérisation,
c) on transmet des paramètres d'entrée physiques réels supplémentaires, tels que le volume de peinture, des données d'air de guidage et de valeur de haute tension, dont l'influence sur le résultat de la pulvérisation n'est pas connu exactement, à un réseau neuronal artificiel, que l'on a préalablement renseigné en utilisant des données d'entrée réelles, telles que l'agencement du dispositif de pulvérisation utilisé, le type de peinture, des paramètres de fonctionnement et de valeurs de mesure de la distribution d'épaisseur dans la couche, et qui procède à une conversion des paramètres d'entrée supplémentaires en paramètres d'entrée de modèle qui sont transmis au modèle phénoménologique,
d) on intègre dans une unité fonctionnelle supplémentaire les images de pulvérisation formées par le modèle phénoménologique en fonction de données de déplacement du dispositif de pulvérisation, pour former la couche de peinture complète et on édite la distribution d'épaisseur dans ladite couche de peinture.

2. Procédé selon la revendication 1, **caractérisé en ce que** pour chaque paramètre de modèle souhaité, on renseigne un réseau neuronal distinct, qui dispose seulement d'une sortie unique ainsi que d'un certain nombre de neurones correspondant à une partie ou à la totalité des grandeurs d'entrée disponibles.

3. Procédé selon la revendication 1 ou 2, **caractérisé en ce qu'**on identifie un paramètre comme non pertinent et on l'élimine lorsque les processus d'apprentissage de deux réseaux neuronaux qui ne diffèrent formellement que d'un paramètre d'entrée, pour un jeu de données dont le reste est identique, aboutissent à des résultats d'apprentissage équivalents.
